# EUROPEAN PATENT APPLICATION

(11) **EP 2 490 376 A1**
(43) Date of publication of application: **22.08.2012**
(21) Application number: 12155669.0
(22) Date of filing: 15.02.2012
(51) Int. Cl.: H04L 12/26

(54) **System for testing roundtrip time between intelligent electronic devices**

(30) Priority: 21.02.2011 US 201113031386
(71) Applicant: General Electric Company, Schenectady, NY 12345 (US)
(72) Inventor: Pamulaparthy, Balakrishna, 500081 Andhra Pradesh (IN); Lamarre, Gregory James, Markham, Ontario L6E-1B3 (CA); Kovvali, Gayatri Prasad, 500081 Andhra Pradesh (IN)
(74) Representative: Cleary, Fidelma

(57) **Abstract**

In one embodiment, a system (100) is provided including: a first intelligent electronic device (IED) (110A); and a second IED (110B) in communication with the first IED (110A), wherein each IED (110A, 110B) comprises: a transmitter (40) for transmitting a Generic Object Oriented Substation Event (GOOSE) message to another IED at a first timestamp; a receiver (50) for receiving the GOOSE message from the another IED at a second timestamp; a calculator (60) for calculating a roundtrip time based on the first timestamp and the second timestamp; and a determinator (70) for determining if the roundtrip time is within a specified roundtrip time.

## Description

### BACKGROUND OF THE INVENTION

The subject matter disclosed herein relates to substation automation systems for substations in a power system and more specifically, to solutions for testing intelligent electronic devices (IED) within a substation automation system, specifically with the International Electrotechnical Commission (IEC) 61850 protocol.

Power systems include components, such as relays, meters, or other similar devices, that require protection, control, and monitoring with substation automation systems. Intelligent electronic devices (IEDs) are used to monitor such components. IEDs communicate with one another and also continuously receive data from the components within the power system. IEDs can determine where and when a fault occurs with one or more of the components in the power system and can send this data to a master station.

The IEC 61850 protocol is an internationally accepted communication standard between devices, such as IEDs, of a substation. Substations utilizing the IEC 61850 protocol require Generic Object Oriented Substation Events (GOOSE) for peer-peer communications between the IEDs. Exchanging critical information in GOOSE messages between IEDs within a specific time frame is an important parameter within a substation, for example, when a fault occurs within the power system.

### BRIEF DESCRIPTION OF THE INVENTION

Solutions for testing IEDs within a system are disclosed. In one embodiment, a system is provided comprising: a first intelligent electronic device (IED); and a second IED in communication with the first IED, wherein each IED comprises: a transmitter for transmitting a Generic Object Oriented Substation Event (GOOSE) message to another IED at a first timestamp; a receiver for receiving the GOOSE message from the another IED at a second timestamp; a calculator for calculating a roundtrip time based on the first timestamp and the second timestamp; and a determinator for determining if the roundtrip time is within a specified roundtrip time.

In a first aspect, the invention resides in a system comprising: a first intelligent electronic device (IED); and a second IED in communication with the first IED, wherein each IED comprises: a transmitter for transmitting a Generic Object Oriented Substation Event (GOOSE) message to another IED at a first timestamp; a receiver for receiving the GOOSE message from the another IED at a second timestamp; a calculator for calculating a roundtrip time based on the first timestamp and the second timestamp; and a determinator for determining if the roundtrip time is within a specified roundtrip time.

The system may further comprise a fault simulator for transmitting fault data to the first IED and the second IED, such that the fault data simulates a test fault.

In another aspect, the invention resides in a method comprising transmitting a Generic Object Oriented Substation Event (GOOSE) message from a first intelligent electronic device (IED) to a second IED at a first timestamp; receiving the GOOSE message at the first IED from the second IED at a second timestamp; calculating a roundtrip time based on the first timestamp and the second timestamp; and determining if the roundtrip time is within a specified roundtrip time.

The invention also resides in a computer program arranged to perform the above method when run a computer and in the computer program embodied on a computer readable medium.

### BRIEF DESCRIPTION OF THE DRAWINGS

Embodiments of the present invention will now be described, by way of example only, with reference to the accompanying drawings in which:
FIG. 1 shows a block diagram of an illustrative environment and computer infrastructure for implementing one embodiment of the invention.
FIG. 2 shows a block diagram of a system according to one embodiment of the invention.
FIG. 3 shows a flow diagram of a process of testing IEDs within a substation system according to one embodiment of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

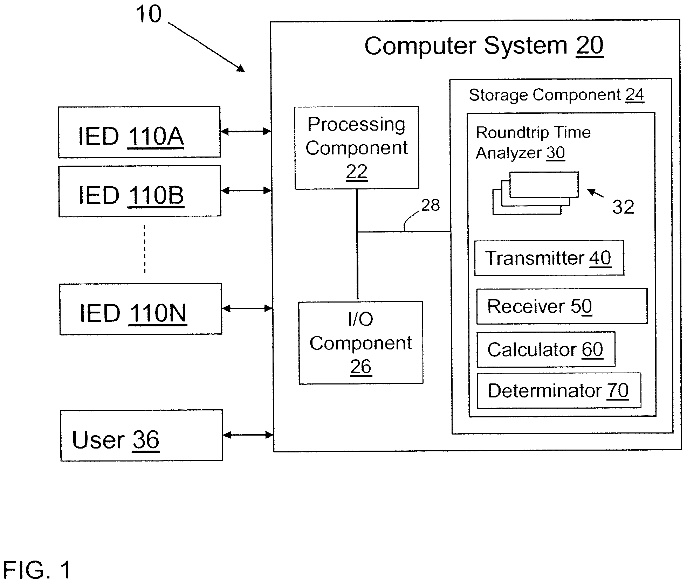

Turning to the drawings, FIG. 1 shows an illustrative environment 10 for testing intelligent electronic devices (IEDs) within a substation system. To this extent, environment 10 includes a computer system 20 that can perform a process described herein in order to test IEDs within a substation system. In particular, computer system 20 is shown including a roundtrip time analyzer 30, which makes computer system 20 operable to test IEDs within a substation system by performing a process described herein.

Computer system 20 is shown in communication with a plurality of IEDs 110A, 110B, ..., 110N. There may be any number (N) of IEDs in communication with computer system 20. Although it is shown that computer system 20 is separate from IEDs 110A, 110B, ..., 110N, it is understood that each IED 110A, 110B, ..., 110N may include a computer system 20 embedded therein.

Computer system 20 is also shown in communication with user 36. A user may, for example, be a programmer or operator. Interactions between these components and computer system 20 will be discussed in greater detail below. Computer system 20 is shown including a processing component 22 (e.g., one or more processors), a storage component 24 (e.g., a storage hierarchy), an input/output (I/O) component 26 (e.g., one or more I/O interfaces and/or devices), and a communications pathway 28. In one embodiment, processing component 22 executes program code, such as roundtrip time analyzer 30, which is at least partially embodied in storage component 24. While executing program code, processing component 22 can process data, which can result in reading and/or writing the data to/from storage component 24 and/or I/O component 26 for further processing. Pathway 28 provides a communications link between each of the components in computer system 20. I/O component 26 can comprise one or more human I/O devices or storage devices, which enable user 36 to interact with computer system 20 and/or one or more communications devices to enable user 36 to communicate with computer system 20 using any type of communications link. To this extent, roundtrip time analyzer 30 can manage a set of interfaces (e.g., graphical user interface(s), application program interface, and/or the like) that enable human and/or system interaction with roundtrip time analyzer 30.

In any event, computer system 20 can comprise one or more general purpose computing articles of manufacture (e.g., computing devices) capable of executing program code installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, roundtrip time analyzer 30 can be embodied as any combination of system software and/or application software. In any event, the technical effect of computer system 20 is to provide processing instructions for testing IEDs 110A, 110B, ..., 110N within a substation system

Further, roundtrip time analyzer 30 can be implemented using a set of modules 32. In this case, a module 32 can enable computer system 20 to perform a set of tasks used by roundtrip time analyzer 30, and can be separately developed and/or implemented apart from other portions of roundtrip time analyzer 30. Roundtrip time analyzer 30 may include modules 32 which comprise a specific use machine/hardware and/or software. Regardless, it is understood that two or more modules, and/or systems may share some/all of their respective hardware and/or software. Further, it is understood that some of the functionality discussed herein may not be implemented or additional functionality may be included as part of computer system 20.

When computer system 20 comprises multiple computing devices, each computing device may have only a portion of roundtrip time analyzer 30 embodied thereon (e.g., one or more modules 32). However, it is understood that computer system 20 and roundtrip time analyzer 30 are only representative of various possible equivalent computer systems that may perform a process described herein. To this extent, in other embodiments, the functionality provided by computer system 20 and roundtrip time analyzer 30 can be at least partially implemented by one or more computing devices that include any combination of general and/or specific purpose hardware with or without program code. In each embodiment, the hardware and program code, if included, can be created using standard engineering and programming techniques, respectively.

Regardless, when computer system 20 includes multiple computing devices, the computing devices can communicate over any type of communications link. Further, while performing a process described herein, computer system 20 can communicate with one or more other computer systems using any type of communications link. In either case, the communications link can comprise any combination of various types of wired and/or wireless links; comprise any combination of one or more types of networks; and/or utilize any combination of various types of transmission techniques and protocols.

As discussed herein, roundtrip time analyzer 30 enables computer system 20 to provide processing instructions for testing IEDs 110A, 110B, ... 110N within a substation system. Roundtrip time analyzer 30 may include logic, which may include the following functions: a transmitter 40, a receiver 50, a calculator 60, and a determinator 70. In one embodiment, roundtrip time analyzer 30 may include logic to perform the above-stated functions. Structurally, the logic may take any of a variety of forms such as a field programmable gate array (FPGA), a microprocessor, a digital signal processor, an application specific integrated circuit (ASIC) or any other specific use machine structure capable of carrying out the functions described herein. Logic may take any of a variety of forms, such as software and/or hardware. However, for illustrative purposes, roundtrip time analyzer 30 and logic included therein will be described herein as a specific use machine. As will be understood from the description, while logic is illustrated as including each of the above-stated functions, not all of the functions are necessary according to the teachings of the invention as recited in the appended claims.

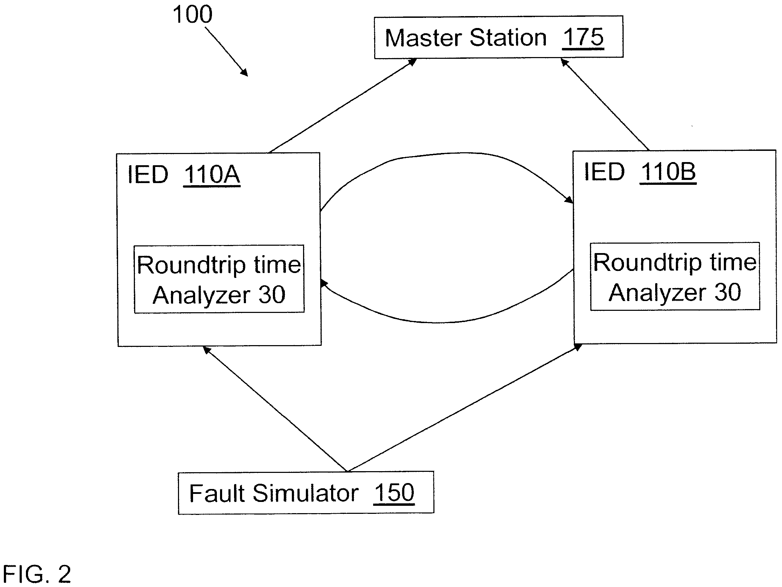

Turning now to FIG. 2, a block diagram of a substation system 100 according to an embodiment of the invention is shown. Substation system 100 includes a first IED 110A in communication with a second IED 110B, a master station 175, and a fault simulator 150. As shown in FIG. 2, computer system 20 (not shown) including roundtrip time analyzer 30 may be embedded within first IED 110A and second IED 110B. However, computer system 20 may be a separate component in communication with or connected to first IED 110A and second IED 110B. Although only two IEDs 110A, 110B are shown in FIG. 2, it is understood that any number of IEDs may be in communication with master station 175 and fault simulator 150.

As shown in FIG. 2, each IED 110A, 110B, may include computer system 20 with roundtrip time analyzer 30 embedded therein. Alternatively, as shown in FIG. 1, each IED 110A, 110B may be in communication with computer system 20, which includes roundtrip time analyzer 30. Regardless, roundtrip time analyzer 30 is configured to test first IED 110A and second IED 110B.

First IED 110A and second IED 110B receive fault data from fault simulator 150, such that the fault data simulates a test fault in substation system 100. In this way, first IED 110A and second IED 110B are tested to determine how first IED 110A and second IED 110B operate under fault conditions. The test fault may be any known fault that is likely to occur in a power system, such as, but not limited to, a bus coupler fault or a transmission line fault. The fault data sent from fault simulator 150 to first IED 110A and to second IED 110B may include GOOSE datasets sent at a configured duty cycle. Each GOOSE dataset may include 16, 32, or 64 inputs and may be digital inputs or analog inputs.

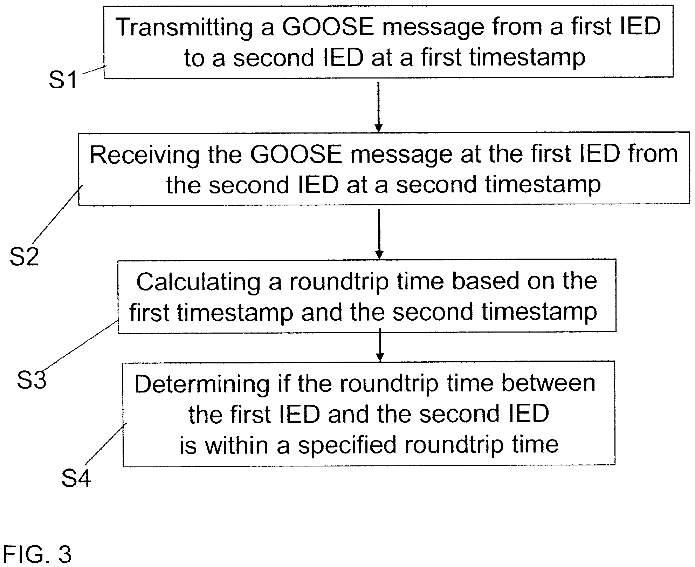

Turning now to FIG. 3, a flow diagram of an embodiment of testing first IED 110A and second IED 110B within substation system 100 is shown. In step S1, first IED 110A is configured to transmit, using transmitter 40, a Generic Object Oriented Substation Event (GOOSE) message to second IED 110B at a first timestamp. The GOOSE message may be any now known or later developed type of GOOSE message, such as, but not limited to: a Generic Substation State Event (GSSE) message, a Fixed GOOSE message, a Configurable GOOSE Digital Input (DI) message, or a Configurable GOOSE Analog Input (AI) message. A Fixed GOOSE message is a type of GOOSE message which carries a GSSE dataset. The GOOSE message may also include 16, 32, or 64 inputs. The inputs may be digital or analog inputs. However, it is understood that any other specified number of inputs may be applicable.

In step S2, first IED 110A is also configured to receive, using receiver 50, the same GOOSE message from second IED 110B at a second timestamp. That is, the GOOSE message is sent from first IED 110A to second IED 110B, and then returned to first IED 110A. In step S3, calculator 60 calculates a roundtrip time based on the first timestamp and the second timestamp. The roundtrip time is the difference between the first timestamp and the second timestamp.

Next, in step S3, determinator 70 determines if the roundtrip time is within a specified roundtrip time. If the GOOSE message includes digital inputs, the specified roundtrip time may be approximately 20 milliseconds (ms). If the GOOSE message includes analog inputs, the specified roundtrip time may be approximately 100 ms. That is, the roundtrip time should be within the specified roundtrip time to ensure that first IED 110A and second IED 110B are operating correctly under fault conditions. However, it is understood that other specified roundtrip times may be applicable.

Returning now to FIG. 2, substation system 100 may also include master station 175. Although not shown, first IED 110A and second IED 110B may be connected to or in communication with other devices in substation system 100. First IED 110A and second IED 110B may continuously transmit, using transmitter 40 (FIG. 1) data regarding these other devices to master station 175. When a fault occurs at a device, whichever IED 110A, 110B that is associated with the device will transmit data indicating the fault to master station 175, such that the fault can be remedied. The data sent to master station 175 from IEDs 110A, 110B may be at specified rate. This specified rate may be based on the number input points (digital or analog) and the interval of points, as known in the art.

While shown and described herein as a roundtrip time analyzer, it is understood that aspects of the invention further provide various alternative embodiments. For example, in one embodiment, the invention provides a computer program embodied in at least one computer-readable medium, which when executed, enables a computer system to test IEDs in a substation system. To this extent, the computer-readable medium includes program code, such as roundtrip time analyzer 30 (FIG. 1), which implements some or all of a process described herein. It is understood that the term "computer-readable medium" comprises one or more of any type of tangible medium of expression capable of embodying a copy of the program code (e.g., a physical embodiment). For example, the computer-readable medium can comprise: one or more portable storage articles of manufacture; one or more memory/storage components of a computing device; paper; and/or the like.

In another embodiment, the invention provides a method of providing a copy of program code, such as roundtrip time analyzer 30 (FIG. 1), which implements some or all of a process described herein. In this case, a computer system can generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program embodied in at least one computer-readable medium. In either case, the set of data signals can be transmitted/received using any type of communications link.

In still another embodiment, the invention provides a method of testing IEDs within a substation system. In this case, a computer system, such as computer system 20 (FIG. 1), can be obtained (e.g., created, maintained, made available, etc.) and one or more modules for performing a process described herein can be obtained (e.g., created, purchased, used, modified, etc.) and deployed to the computer system. To this extent, the deployment can comprise one or more of: (1) installing program code on a computing device from a computer-readable medium; (2) adding one or more computing and/or I/O devices to the computer system; and (3) incorporating and/or modifying the computer system to enable it to perform a process described herein.

It is understood that aspects of the invention can be implemented as part of a business method that performs a process described herein on a subscription, advertising, and/or fee basis. That is, a service provider could offer to provide processing instructions for testing IEDs in a substation system as described herein. In this case, the service provider can manage (e.g., create, maintain, support, etc.) a computer system, such as computer system 20 (FIG. 1), that performs a process described herein for one or more customers. In return, the service provider can receive payment from the customer(s) under a subscription and/or fee agreement, receive payment from the sale of advertising to one or more third parties, and/or the like.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system (100) comprising:
a first intelligent electronic device (IED) (110A); and
a second IED (110B) in communication with the first IED (110A), wherein each IED (110A, 110B) comprises:
a transmitter (40) for transmitting a Generic Object Oriented Substation Event (GOOSE) message to another IED at a first timestamp;
a receiver (50) for receiving the GOOSE message from the another IED at a second timestamp;
a calculator (60) for calculating a roundtrip time based on the first timestamp and the second timestamp; and
a determinator (70) for determining if the roundtrip time is within a specified roundtrip time.

2. The system (100) of claim 1, wherein a type of the GOOSE message is one of: a Generic Substation State Event (GSSE) message, a Fixed GOOSE message, a Configurable GOOSE Digital Input (DI) message, or a Configurable GOOSE Analog Input (AI) message.

3. The system (100) of claim 1 or 2, wherein the GOOSE message includes one of: sixteen, thirty-two, or sixty-four inputs.

4. The system (100) of claim 3, wherein the GOOSE message includes digital inputs, and wherein the specified roundtrip time is approximately 20 milliseconds (ms).

5. The system (100) of claim 3, wherein the GOOSE message includes analog inputs, and wherein the specified roundtrip time is approximately 100 milliseconds (ms).

6. The system (100) of any of claims 1 to 5, wherein the receiver (50) of each IED (110A, 110B) receives fault data from a fault simulator (150), such that the fault data simulates a test fault.

7. The system (100) of claim 6, wherein the test fault is a bus coupler fault.

8. The system (100) of claim 6, wherein the test fault is a transmission line fault.

9. The system (100) of claim 6, wherein the fault data includes GOOSE datasets including one of: sixteen, thirty-two, or sixty-four inputs.

10. A system (100) according to any preceding claim further comprising a fault simulator (150) for transmitting fault data to the first IED (110A) and the second IED (110B), such that the fault data simulates a test fault.

11. A method comprising:
transmitting a Generic Object Oriented Substation Event (GOOSE) message from a first intelligent electronic device (IED) to a second IED at a first timestamp;
receiving the GOOSE message at the first IED from the second IED at a second timestamp;
calculating a roundtrip time based on the first timestamp and the second timestamp; and
determining if the roundtrip time is within a specified roundtrip time.

12. A computer program comprising computer program code means arranged to perform the method of claim 11 when run on a computer.

13. The computer program as claimed in claim 12 embodied on a computer readable medium.
